Europäisches Patentamt

European Patent Office

Office européen des brevets

(19)

(11) Numéro de publication : **0 399 892 B1**

## (12) FASCICULE DE BREVET EUROPEEN

(45) Date de publication du fascicule du brevet :
**20.10.93 Bulletin 93/42**

(51) Int. Cl.⁵ : **B01J 23/56,** B01J 23/58,
B01D 53/36

(21) Numéro de dépôt : **90401351.3**

(22) Date de dépôt : **21.05.90**

(54) **Catalyseur multifonctionnel pour le traitement des gaz d'échappement des moteurs à combustion interne, contenant de l'uranium, au moins un promoteur de l'uranium et au moins un métal précieux et sa préparation.**

(30) Priorité : **24.05.89 FR 8906896**

(43) Date de publication de la demande :
**28.11.90 Bulletin 90/48**

(45) Mention de la délivrance du brevet :
**20.10.93 Bulletin 93/42**

(84) Etats contractants désignés :
**BE DE ES GB IT**

(56) Documents cités :
**FR-A- 2 165 056**
**GB-A- 1 262 076**
**US-A- 4 162 262**
**US-A- 4 526 886**

(73) Titulaire : **INSTITUT FRANCAIS DU PETROLE**
**4, Avenue de Bois Préau**
**F-92506 Rueil-Malmaison Cédex (FR)**

(72) Inventeur : **Mabilon, Gil**
**30, rue de L'Egalité**
**F-78420 Carrières sur Seine (FR)**
Inventeur : **Durand, Daniel**
**18, rue Michelet**
**F-92500 Rueil Malmaison (FR)**
Inventeur : **Courty, Philippe**
**91, rue Condorcet**
**F-78800 Houilles (FR)**
Inventeur : **Prigent, Michel**
**11, rue des Marronniers**
**F-92500 Rueil Malmaison (FR)**

EP 0 399 892 B1

## Description

La présente invention concerne un catalyseur multifonctionnel, son procédé de préparation, et son utilisation pour le traitement des gaz d'échappement des moteurs à combustion interne, plus précisémment pour la conversion du monoxyde de carbone, des hydrocarbures et des oxydes d'azote contenus dans ces gaz.

Les gaz d'échappement des moteurs à combustion interne contiennent essentiellement de l'azote, de l'eau, du dioxyde de carbone, de l'oxygène et de l'hydrogène, considérés comme peu nocifs, ainsi que du monoxyde de carbone, des hydrocarbures et des oxydes d'azote, qui sont considérés comme des polluants de l'environnement. La technique préférée d'élimination de ces polluants est la promotion par un catalyseur des réactions d'oxydo-réduction de ces polluants entre eux ou avec les composés peu nocifs, pour former essentiellement de l'azote, de l'eau et du dioxyde de carbone, tous peu nocifs pour l'environnement.

Un catalyseur est dit multifonctionnel lorsqu'il est capable de promouvoir simultanément la conversion de plusieurs polluants en composés peu nocifs.

Les catalyseurs d'épuration des gaz d'échappements peuvent être sous forme de billes ou de monolithes. Dans ce cas, le catalyseur est constitué d'un substrat inerte en métal ou en céramique, qui est revêtu d'une couche généralement constituée d'alumine, d'oxydes de cérium et de métaux précieux.

On définit la richesse d'un mélange air-carburant alimentant un moteur comme le rapport entre le rapport air/carburant stoechiométrique et le rapport air/carburant réel. Une richesse de 1 signifie que le mélange air-carburant est strictement stoechiométrique. Une richesse supérieure à 1 signifie que le mélange présente un excés de carburant par rapport à la quantité d'air engagé.

L'art antérieur est illustré par les brevets US-A-4526 886, GB-A-1262 076, US-A-4162 262 et FR-A- 2165 056.

Plus précisement, il est connu que l'oxyde de cérium stabilise l'alumine et présente une capacité de stockage de l'oxygène (J.Z. SHYU, W.H. WEBER et H.S. GANDHI, J. Phys. Chem. 1988, 92, 4964). Il augmente l'activité des catalyseurs pour la réaction de conversion du gaz à l'eau.

La capacité de stockage de l'oxygène est la propriété, que présente entre autres le cérium, de pouvoir s'oxyder dans un gaz d'échappement oxydant, et, en se réduisant, d'oxyder les composés réducteurs même quand le gaz d'échappement devient réducteur.

Des catalyseurs ne contenant pas de cérium mais contenant de l'uranium ont déjà été revendiqués pour le traitement des gaz d'échappement des moteurs à combustion interne. Ainsi, le brevet anglais GB 1 262 076 décrit un catalyseur contenant du fer, du nickel et de l'uranium déposé sur alumine. Mais ce catalyseur ne contient pas de métaux précieux ce qui limite fortement son efficacité dans la transformation des dits polluants.

Le brevet US 4 526 886 décrit un catalyseur contenant de l'uranium, du platine et du rhodium dispersés sur un support oxyde inorganique de grande surface spécifique. Ce catalyseur est plus particulièrement performant lorsqu'il opère dans un gaz d'échappement de richesse moyenne supérieure à 1, ou de richesse moyenne égale à 1, mais oscillant fortement autour de cette valeur. En outre, il maintient une bonne activité même en présence d'oxyde de soufre.

Les catalyseurs contenant de l'uranium et connus jusqu'à présent présentent toutefois l'inconvénient de subir une forte dégradation de leur activité lorsqu'ils sont soumis à des traitements prolongés à hautes températures.

Or il a été découvert que, d'une façon inattendue, il était possible de stabiliser thermiquement l'activité catalytique des catalyseurs adaptés à traiter des gaz d'échappement de moteurs à combustion interne fonctionnant soit avec de l'essence soit avec du gazole. On a aussi découvert d'une manière tout aussi inattendue que l'on pouvait diminuer le rejet d'hydrocarbures polyaromatiques dans l'atmosphère. Enfin, on a découvert que l'invention permettait d'améliorer l'activité initiale du catalyseur mais aussi sa stabilité lors de traitements à hautes températures, par exemple à une température supérieure à 800°C.

L'invention concerne donc un catalyseur multifonctionnel pour la conversion du monoxyde de carbone, des hydrocarbures et des oxydes d'azote contenus dans les gaz d'échappement de moteurs a combustion interne, comprenant un support contenant une couche poreuse qui comprend une phase catalytiquement active comprenant au moins un métal A choisi dans le groupe formé par le platine, le rhodium, le palladium, le ruthénium, l'iridium et leurs mélanges caractérisé en ce que la couche poreuse comprend en % poids, à sec :

- 50 à 99,7 % d'au moins un oxyde inorganique réfractaire,
- 0,1 à 25 % d'au moins un oxyde d'uranium,
- 0,1 à 35 % d'au moins un oxyde d'au moins un métal P choisi dans le groupe formé par le lithium, le sodium, le potassium, le rubidium, le césium, le béryllium, le magnésium, le calcium, le strontium, le baryum, le lanthane, le praséodyme, le néodyme, le gadolinium, et l'yttrium, et,
- 0,1 à 20 % dudit métal A.

De manière avantageuse, le catalyseur multifonctionnel selon l'invention permettant de réaliser le meilleur compromis en oxydation du monoxyde de carbone et des hydrocarbures et en réduction des oxydes d'azote, comprend une couche poreuse contenant en % poids, à sec :
- 82 à 96,6 % d'au moins un oxyde inorganique réfractaire,
- 2 à 12 % d'au moins un oxyde d'uranium,
- 1 à 15 % d'au moins un oxyde dudit métal P,
- 0,4 à 8 % d'au moins un métal A.

On utilise avantageusement comme métal A le platine et de préférence le couple platine-rhodium. On a obtenu une très bonne stabilité à haute température en opérant avec le couple de métaux ci-dessus et des oxydes de métal promoteur P tels que le lanthane, le baryum ou le potassium.

L'amélioration de la stabilité thermique des catalyseurs selon l'invention permet d'allonger leur durée de vie en conditions réelles ce qui permet de respecter les normes de rejets de polluants des véhicules automobiles même lorsque ceux-ci ont parcouru 80 000 km.

L'invention propose un autre support de catalyseur notamment pour le traitement des gaz d'échappement des moteurs à combustion interne constitué de billes ou d'extrudés en alumine contenant de l'uranium et au moins un autre élément choisi dans le groupe comprenant le lithium, le sodium, le potassium, le rubidium, le césium, le béryllium, le magnésium, le calcium, le strontium, le baryum, l'yttrium, le lanthane, le praséodyme, le néodyme, et le gadolinium.

L'invention propose un catalyseur préparé sur l'un ou l'autre de ces supports par dépôt d'au moins un métal choisi dans le groupe comprenant le platine, le palladium, le rhodium, l'iridium et le ruthénium.

Les substrats selon l'invention comprennent en général les substrats métalliques ou céramiques.

Les substrats métalliques sont notamment ceux obtenus à partir d'alliages de fer, de nickel et de chrome ou ceux obtenus a partir d'alliages de fer, de chrome et d'aluminium. Des alliages contenant outre le fer, le chrome et l'aluminium, du cobalt et/ou du cérium et/ou de l'yttrium peuvent aussi être utilisés. Le métal peut aussi être de l'acier carboné ou de la fonte simple.

On peut avantageusement prétraiter les substrats métalliques contenant de l'aluminium par chauffage en atmosphère oxydante dans des conditions de durée et de température qui permettent de former, à partir de l'aluminium contenu dans l'alliage, une couche superficielle d'oxyde d'aluminium. Dans le cas des aciers carbonés ou de la fonte, on peut également les prétraiter par recuit du fer ou de l'acier recouvert au préalable d'une couche d'aluminium pour obtenir un revêtement d'une couche de diffusion aluminium/fer.

Les substrats céramiques sont, par exemple, ceux comportant comme matière principale au moins un composé choisi dans le groupe formé par la cordiérite, l'alumine, la mullite, la porcelaine, les carbures ou nitrures de bore ou de silicium, le titanate d'aluminium, la zircone, les zéolithes.

Dans un mode de réalisation préféré de l'invention, la structure du substrat rigide est avantageusement une structure cellulaire en nids d'abeille qui peut être de forme carrée, hexagonale, tétragonale, triangulaire ou ondulée. Elle doit permettre le passage de gaz dans les canaux ou conduits formés lors de leur fabrication par extrusion, solidification d'éléments en forme de feuille, ou juxtaposition d'une feuille plane et d'une feuille ondulée, etc...

La structure du substrat peut aussi être du type éponge céramique telle que celle connue sous la marque Selee, ou être constituée d'un matelas de fibres métalliques ou céramiques.

Le support de catalyseur est obtenu par dépôt sur le substrat d'une couche poreuse. Le dépôt est en général consécutif à l'opération unitaire de mise en forme, mais il peut également la précéder, notamment dans l'utilisation de substrats métalliques.

L'oxyde inorganique réfractaire est généralement choisi dans le groupe formé par l'alumine alpha, l'alumine gamma, l'alumine delta, l'alumine kappa, l'alumine éta, l'alumine théta, l'alumine ro, l'alumine khi, la silice, la silice-alumine, les zéolithes et leurs mélanges en toutes proportions. On préfère utiliser l'alumine gamma parce qu'elle a une plus grande surface spécifique.

L'alumine est du type de celles habituellement utilisées en catalyse. Elle peut résulter de la calcination d'un sel décomposable ou d'un hydrate. Dans ce dernier cas, l'hydrate peut lui-même être issu de l'hydrolyse d'un alcoolate, du type des produits vendus sous l'appellation Disperal de la société Condea, ou Catapal de la société Vista, ou de la réaction entre une base et une solution d'un sel d'aluminium tel que le nitrate, le sulfate, le carbonate ou le chlorure. Les pseudo-boehmites de la gamme Versal de la société Kaiser sont utilisables. Elle peut également être une alumine commerciale telle que celles vendues sous l'appellation Sphéralite de la société Rhône-Poulenc, Puralox de la société Condéa ou Versal GL ou GH de la société Kaiser. Elle peut enfin résulter du mélange d'au moins deux alumines précitées.

L'alumine entrant dans la composition de la couche poreuse est préférentiellement une alumine de surface spécifique supérieure à 10 m2/g, par exemple de 20 à 250 m2/g, et de volume poreux supérieur à 0,05 cm3/g, par exemple de 0,1 à 2 cm3/g.

L'invention concerne les procédés de préparation du catalyseur. Selon un premier mode de préparation, on peut effectuer les étapes successives suivantes :

**a)** on prépare une suspension aqueuse d'au moins un oxyde inorganique réfractaire, d'au moins un sel ou un oxyde d'uranium et d'au moins un sel ou un oxyde de métal P ou d'au moins un oxyde mixte d'uranium et de métal P,

**b)** on enduit le substrat par la suspension de façon à obtenir la couche poreuse contenant ledit oxyde inorganique, ledit sel ou oxyde d'uranium et ledit sel ou oxyde de métal P, ou ledit oxyde mixte d'uranium et de métal P,

**c)** on sèche et on effectue un traitement thermique à une température inférieure à 1000 °C,

**d)** on imprègne la couche poreuse résultant de l'étape c) par une solution d'au moins un précurseur d'au moins un métal A, et

**e)** on sèche et on effectue un traitement thermique à une température inférieure à 1000 °C.

Selon un second mode de préparation, on effectue en général les étapes suivantes :

**a)** on prépare une suspension aqueuse d'au moins un oxyde inorganique réfractaire,

**b)** on enduit le substrat par la suspension de façon à obtenir la couche poreuse contenant ledit oxyde inorganique réfractaire,

**c)** on sèche et on effectue un traitement thermique à une température inférieure à 1000°C,

**d)** on imprègne la couche poreuse résultant de l'étape c)

soit par une solution d'au moins un sel d'uranium et d'au moins un sel de métal P,

soit par une solution d'au moins un sel d'uranium, d'au moins un sel de métal P et d'au moins une partie d'au moins un précurseur d'au moins un métal A,

**e)** on sèche et on effectue un traitement thermique à une température inférieure à 1000°C

**f)** on imprègne la couche poreuse résultant de l'étape e) soit par la totalité d'au moins un précurseur d'au moins un métal A, soit par la partie restante d'au moins un précurseur d'au moins un métal A, et

**g)** on sèche et on effectue un traitement thermique à une température inférieure à 1000 °C.

Selon un troisième mode de préparation, lorsque la couche poreuse est constituée de billes ou d'extrudés, on effectue en général les étapes suivantes :

**a)** on imprègne des billes ou des extrudés, d'au moins un oxyde inorganique réfractaire par une solution d'au moins un sel d'uranium et d'au moins un sel de métal P,

**b)** on sèche et on effectue un traitement thermique à une température inférieure à 1000 °C,

**c)** on imprègne les billes ou les extrudés résultant de l'étape b) par une solution d'au moins un précurseur d'au moins un métal A, et

**d)** on sèche et on effectue un traitement thermique à une température inférieure à 1000 °C.

On peut également, selon un quatrième mode de préparation, effectuer les étapes suivantes après les précédentes étapes a) et b),

**c)** on broye les billes ou les extrudés et on obtient une poudre,

**d)** on prépare une suspension aqueuse contenant ladite poudre et on ajoute éventuellement au moins un oxyde inorganique réfractaire,

**e)** on enduit le substrat par la suspension de façon à obtenir la couche poreuse contenant le ou les oxydes inorganiques réfractaires, et lesdits oxydes d'uranium et d'au moins un métal P,

**f)** on imprègne la couche poreuse résultant de l'étape e) par une solution d'au moins un précurseur d'au moins un métal,

**e)** on sèche et on effectue un traitement thermique à une température inférieure à 1000 °C.

Enfin, lorsque le substrat est constitué de feuilles métalliques, on peut soit enduire et imprégner les feuilles selon les premier, second et quatrième modes, on réalise le traitement thermique et l'on effectue la mise en forme monolithique, soit enduire les feuilles selon le premier et quatrième mode, réaliser le traitement thermique et effectuer la mise en forme monolithique. On imprègne après la mise en forme, la couche poreuse résultant du traitement thermique par une solution d'au moins un précurseur d'au moins un métal A, et on effectue un traitement thermique à une température inférieure à 1000°C.

L'immersion du substrat dans une solution d'un sel d'aluminium ou d'un composé organoaluminique suivie, éventuellement d'une hydrolyse, et d'une calcination à au moins 400°C, peut être utilisée pour obtenir la couche poreuse d'alumine.

Dans un mode préféré de mise en oeuvre l'alumine peut être déposée sur le substrat par enduction d'une suspension d'alumine.

Cette suspension contient en général une alumine dispersible type Pural ou Disperal de la société Condea, Catapal de la société Vista ou Versal de la société Kaiser. Cette suspension peut aussi être préparée à partir de poudre d'une alumine peu dispersible type Sphéralite de la société Rhône-Poulenc, ou Versal GI ou Versal GH de la société Kaiser, ou Puralox de la société Condéa. Une suspension contenant un mélange des deux types d'alumine fortement et faiblement dispersibles constitue un des modes préférés de mise en oeuvre, tel qu'il est décrit dans le brevet français n°2 512 004.

La suspension est en général réalisée par introduction de la ou les poudres d'alumine dans une solution aqueuse de pH compris entre 3 et 9.

L'enduction peut être réalisée par immersion du substrat métallique ou céramique dans la suspension, égouttage de la pièce enduite, puis soufflage de cette même pièce pour achever de déboucher les orifices encore obstrués par la suspension.

Dans le cas de l'utilisation d'un substrat métallique, suivant une technique décrite dans le brevet FI 863705 les feuilles métalliques planes et ondulées pourront avantageusement avant mise en forme, être immergées dans la suspension précitée, égouttées puis séchées ; ou encore la suspension précitée sera pulvérisée sur les deux faces des feuilles métalliques, puis ces dernières seront séchées comme ci-avant.

La pièce enduite est en général séchée et activée thermiquement à une température au moins égale à 400°C, pendant au moins 0,5 heure, afin d'améliorer l'adhérence de la couche d'alumine.

L'introduction de l'uranium peut être réalisée selon plusieurs méthodes :

- selon un premier mode de mise en oeuvre, l'imprégnation dite à sec de billes ou de poudre d'alumine par une solution d'au moins un sel d'uranium tel que, par exemple, le nitrate ou le chlorure d'uranyle, suivie d'une activation thermique à une température d'au moins 400°C permet d'obtenir une alumine peu dispersible contenant déjà l'uranium et pouvant être mise ultérieurement en suspension après broyage.

- dans un autre mode de mise en oeuvre l'uranium est introduit dans la suspension d'alumine sous forme de sel soluble tel que nitrate ou chlorure d'uranyle, ou sous forme de poudre d'oxyde d'uranium obtenue par exemple par calcination à au moins 400°C pendant 0,5 heure du précipité résultant de l'action de l'ammoniaque sur une solution d'un sel d'uranyle, par exemple le nitrate d'uranyle.

- dans un autre mode de mise en oeuvre l'uranium est déposé sur la pièce préalablement enduite d'alumine par trempage de ladite pièce dans une solution aqueuse de nitrate ou de chlorure d'uranyle puis calcination à une température d'au moins 400°C.

- un autre mode de mise en oeuvre consiste à introduire l'uranium par au moins deux des procédures précitées, par exemple par imprégnation d'une partie sur la poudre d'alumine, avant enduction, puis d'une autre partie par exemple après enduction.

Il est connu de l'homme de l'art que l'uranium forme de nombreux oxydes, en particulier $UO_2$, $UO_3$ et $U_3O_8$, ainsi que des oxydes non stoechiométriques. Pour la simplicité de la description et des exemples les fractions massiques ont été calculées en considérant l'oxyde $U_3O_8$.

Le ou les promoteurs P choisis peuvent être déposés simultanément à l'uranium, par au moins une des procédures décrites ci-avant, ou encore être déposés consécutivement à l'uranium selon au moins une des procédures précitées, ou encore être ajoutés sous forme d'au moins un oxyde mixte ou une solution solide de formule $U_xP_yO_z$ où P représente un promoteur.

Les précurseurs des promoteurs choisis peuvent être des sels solubles en milieu aqueux ou non-aqueux tels que les nitrates et chlorures, les acétylacétonates, les formiates, les acétates, les hydroxydes et/ou des composés peu solubles tels que les hydroxydes, les carbonates, les hydroxycarbonates etc... Ces derniers composés seront généralement ajoutés à la suspension avant dépôt.

Après enduction, ajout de l'uranium et d'au moins un des promoteurs du groupe précité, le monolithe enduit est séché puis activé thermiquement.

La température de séchage est en général comprise entre 50 et 150°C. La durée du séchage d'au moins 0,5 heure est éventuellement prolongée pour atteindre une teneur résiduelle moyenne en eau égale au plus à 8 % et préférentiellement au plus à 5 % poids.

Pour certaines compositions catalytiques il peut être avantageux d'opérer un séchage par l'air humide ou encore d'opérer un séchage hydrothermique sous pression.

L'activation thermique consécutive au séchage est habituellement menée jusqu'à une température au moins égale à 400°C pendant au moins 0,5 heure. Il peut se révéler avantageux d'opérer une élévation progressive de la température, par exemple 50°C/heure, et d'opérer sous balayage d'air.

Le dépôt de métaux choisis dans le groupe comportant le platine, le palladium, le rhodium, l'iridium et le ruthénium, sur le support permet d'obtenir le catalyseur.

Ce dépôt est habituellement réalisé par imprégnation du support par une solution de précurseurs des métaux. Les précurseurs utilisés sont ceux classiquement utilisés pour la préparation des catalyseurs, en particulier et quand ils existent, les chlorures, les homologues acides des chlorures, les complexes chlorés, les nitrates, les complexes amminés, les acétylacétonates. A titre d'exemple non limitatif on peut citer l'acide hexachloroplatinique, le chlorure de platine tétrammine, le dinitrodiammine platine, le nitrate de palladium, le chlorure de palladium, le dichlorure de palladium tétrammine, le trichlorure de rhodium, le nitrate de rhodium, l'acide hexachloro-iridique, le trichlorure de ruthénium, et le dichlorure de ruthénium pentammine.

Cette imprégnation est en général réalisée par mouillage du support par un volume de solution de précurseurs des métaux précieux au moins égal à la moitié du volume poreux de la couche poreuse.

Dans un autre mode de réalisation de l'invention, au moins une partie d'au moins un des métaux précieux précités peut être introduite au préalable :
- soit par imprégnation de billes ou de poudre d'alumine peu dispersible, préalablement à l'enduction
- soit par imprégnation d'un composé insoluble d'uranium, par exemple l'oxyde U3O8, préalablement à l'enduction
- soit par imprégnation d'un composé insoluble d'au moins un des promoteurs précités, par exemple d'un hydroxyde de terre rare, d'un hydroxycarbonate de métal alcalino-terreux, préalablement à l'enduction
- soit par imprégnation de la couche poreuse d'enduction préalablement activée thermiquement, avant dépôt du composé d'uranium et/ou avant dépôt d'au moins un composé promoteur de la liste précitée.

Dans le cas où le support est constitué de billes ou d'extrudés l'imprégnation peut être réalisée par mouillage par un volume de solution de métaux précieux au moins égal à la moitié du volume poreux de ces billes ou extrudés.

Le support imprégné est en général activé thermiquement à une température finale au moins égale à 300°C pour obtenir un catalyseur de traitement des gaz d'échappement des moteurs à combustion interne.

Selon une caractéristique avantageuse de l'invention la somme des concentrations en uranium et en métaux P, exprimée sous forme élémentaire, est au moins égale au tiers de la concentration en métaux A et de préférence peut être au moins égale à la moitié de la concentration en métaux A.

Dans le cas où le support de catalyseur est sous forme de billes ou d'extrudés la composition du support est la même que celle indiquée ci-dessus pour la couche poreuse des catalyseurs comprenant un substrat.

Dans le cas où le support de catalyseur comprend un substrat céramique ou métallique la quantité de couche poreuse est en général comprise entre 20 et 200 g/l de substrat, de préférence entre 50 et 150 g/l.

Les exemples ci-après illustrent l'invention sans en limiter la portée.

EXEMPLE 1 : PREPARATION D'UN CATALYSEUR (A) DE L'ART ANTERIEUR

On dilue 30 g d'acide nitrique pur dans 3 l d'eau permutée. A cette solution on ajoute 850 g d'alumine EXP Spheralite SPH 531 (appelée EXP 531 dans la suite du brevet) en poudre de la société Rhône-Poulenc précalcinée à 500 °C, et 400 g d'alumine Disperal en poudre de la société Condea dont la perte au feu à 500 °C est de 25 %. Après calcination à 500 °C la surface spécifique de l'alumine EXP 531 est de 115 m2/g, celle de l'alumine Disperal est de 184 m2/g. Leurs volumes poreux respectifs sont de 1,15 et 0,60 cm3/g.

Cette suspension est utilisée pour enduire un monolithe de 0,904 l en cordièrite de la société Corning pesant 380 g et présentant 62 cellules par cm2.

Le monolithe enduit est égoutté puis soufflé par passage devant un jet d'air comprimé pour en déboucher les canaux. Il est ensuite séché et calciné à 500 °C pendant 3h.

La masse d'alumine déposée sur le monolithe est de 90 g.

Le monolithe est alors imprégné par 150 ml d'une solution de nitrate d'uranyle dans l'eau permutée contenant une masse d'uranium équivalente à 6 g d'oxyde U3O8. Il est ensuite activé par calcination à 500 °C pendant 3h.

Le monolithe enduit d'alumine et d'uranium est alors imprégné par 150 ml d'une solution d'acide hexachloroplatinique et de trichlorure de rhodium contenant 1,064 g de platine et 0,213 g de rhodium. Après 1 h de contact le monolithe est séché à 150 °C pendant 1h puis calciné à 500 °C pendant 3h.

La composition de la couche poreuse du catalyseur (A) ainsi préparé est :
- alumine        92,52 %
- oxyde d'uranium        6,17 %
- platine        1,09 %
- rhodium        0,22 %

EXEMPLE 2 PREPARATION D'UN CATALYSEUR (B) DE L'ART ANTERIEUR

On prépare un catalyseur selon la procédure décrite dans l'exemple 1 mais la quantité de nitrate d'uranyle mise en jeu contient l'équivalent de 8,8 g d'oxyde d'uranium.

Après imprégnation du platine et du rhodium et activation thermique, la composition de la couche poreuse du catalyseur (B) est :
- alumine        89,93 %
- oxyde d'uranium        8,79 %
- platine        1,06 %

- rhodium     0,21 %

EXEMPLE 3 PREPARATION D'UN CATALYSEUR (C) DE COMPARAISON

On enduit un substrat monolithique en céramique de 0,904 l par 90 g d'alumine selon le procédé décrit dans l'exemple 1.

Le monolithe est alors imprégné par 150 ml d'une solution aqueuse de nitrate de baryum contenant l'équivalent de 2,5 g d'oxyde de baryum BaO. Il est ensuite activé par calcination à 500 °C pendant 3h.

Le support est alors imprégné selon le procédé décrit dans l'exemple 1 par 1,064 g de platine et 0,213 g de rhodium.

La composition de la couche poreuse du catalyseur (C) ainsi préparé est :
- alumine     95,97 %
- oxyde de baryum     2,67 %
- platine     1,13 %
- rhodium     0,23 %

EXEMPLE 4 PREPARATION D'UN CATALYSEUR (D) SELON L'INVENTION

On dépose l'uranium et le baryum sur l'alumine peu dispersible par imprégnation de 900 g d'alumine EXP 531 par 1050 ml d'une solution de nitrate d'uranyle et de nitrate de baryum dans de l'eau permutée. Cette solution contient l'équivalent de 83 g de U3O8 et 35 g de BaO. L'alumine imprégnée est ensuite séchée 1 h à 150°C puis calcinée 3 h à 500 °C et broyée.

Un monolithe céramique de 0,904 l est enduit selon le procédé décrit dans l'exemple 1 par une suspension contenant 990 g de poudre d'alumine imprégnée d'uranium et de baryum et 440 g de poudre de Disperal.

Après enduction et calcination à 500 °C pendant 3 h la masse du monolithe enduit et calciné est supérieure de 98 g à la masse initiale de la cordièrite.

Le support est alors imprégné selon le procédé décrit dans l'exemple 1 par 1,064 g de platine et 0,213 g de rhodium.

La composition de la couche poreuse du catalyseur (D) ainsi préparé est :
- alumine     90,14 %
- oxyde d'uranium     6,03 %
- oxyde de baryum     2,55 %
- platine     1,07 %

EXEMPLE 5 PREPARATION D'UN CATALYSEUR (E) SELON L'INVENTION

On dilue 30 g d'acide nitrique pur dans 3 l d'eau permutée. A cette solution on ajoute une quantité de nitrate d'uranyle et d'acétate de baryum équivalent à 79 g d'oxyde d'uranium et 33 g d'oxyde de baryum. A cette solution sont ajoutées les alumines EXP 531 et Disperal comme dans l'exemple 1.

L'enduction d'un monolithe céramique de 0,904 l selon le procédé de l'exemple 1 conduit à une prise de poids du monolithe après activation de 96 g.

Le support est alors imprégné selon le procédé décrit dans l'exemple 1 par 1,064 g de platine et 0,213 g de rhodium.

La composition de la couche poreuse du catalyseur (E) ainsi préparé est :
- alumine     90,27 %
- oxyde d'uranium     5,94 %
- oxyde de baryum     2,48 %
- platine     1,09 %
- rhodium     0,22 %

EXEMPLE 6 PREPARATION D'UN CATALYSEUR (F) SELON L'INVENTION

A 150 g d'une solution de nitrate d'uranyle dans 0,5 l d'eau est ajouté 0,5 l d'ammoniaque 5 N sous agitation vigoureuse. Le précipité obtenu est filtré puis séché, et calciné 3 h à 500°C. Sa masse est de 83 g.

A une suspension acide d'alumines EXP 531 et Disperal préparée selon l'exemple 1 sont ajoutés 79 g d'oxyde d'uranium et une quantité d'acétate de baryum correspondant à 33 g d'oxyde.

Cette suspension est utilisée pour enduire un monolithe céramique de 0,904 l selon le procédé de l'exemple 1.

La prise de poids du monolithe après activation est de 97 g.

Le support est alors imprégné selon le procédé décrit dans l'exemple 1 par 1,064 g de platine et 0,213 g de rhodium.

La composition de la couche poreuse du catalyseur (F) ainsi préparé est :
- alumine          90,37 %
- oxyde d'uranium      5,88 %
- oxyde de baryum       2,45 %
- platine       1,08 %
- rhodium        0,22 %

EXEMPLE 7 PREPARATION D'UN CATALYSEUR (G) SELON L'INVENTION

Selon le procédé de l'exemple 1 un monolithe céramique de 0,904 l est enduit par 90 g d'alumine.

Ce monolithe est alors imprégné par 150 ml d'une solution aqueuse de nitrate d'uranyle et d'acétate de baryum correspondant à 6 g d'oxyde d'uranium et 2,5 g d'oxyde de baryum. Il est ensuite activé par calcination à 500 °C pendant 3h.

Le support est alors imprégné selon le procédé décrit dans l'exemple 1 par 1,064 g de platine et 0,213 g de rhodium.

La composition de la couche poreuse du catalyseur (G) ainsi préparé est :
- alumine          90,20 %
- oxyde d'uranium      6,01 %
- oxyde de baryum       2,51 %
- platine       1,07 %
- rhodium        0,21 %

EXEMPLE 8 PREPARATION D'UN CATALYSEUR (H) DE COMPARAISON

Un monolithe céramique de 0,904 l est enduit par 90 g d'alumine selon le procédé décrit dans l'exemple 1.

Ce support est imprégné par 150 ml d'une solution aqueuse de nitrate de lanthane correspondant à 2,5 g d'oxyde de lanthane. Il est ensuite activé par calcination à 500°C pendant 3h.

Le support est alors imprégné selon le procédé décrit dans l'exemple 1 par 1,064 g de platine et 0,213 g de rhodium.

La composition de la couche poreuse du catalyseur (H) ainsi préparé est :
- alumine          95,97 %
- oxyde de lanthane       2,67 %
- platine       1,13 %
- rhodium        0,23 %

EXEMPLE 9 PREPARATION D'UN CATALYSEUR (I) SELON L'INVENTION

Un catalyseur est préparé selon la même procédure que celle décrite dans l'exemple 8 mais la solution d'imprégnation du monolithe enduit contient outre du nitrate de lanthane, une quantité de nitrate d'uranyle correspondant à 6 g d'oxyde d'uranium.

Le support est alors imprégné selon le procédé décrit dans l'exemple 1 par 1,064 g de platine et 0,213 g de rhodium.

La composition de la couche poreuse du catalyseur (I) ainsi préparé est :
- alumine          90,20 %
- oxyde d'uranium      6,01 %
- oxyde de lanthane       2,51 %
- platine       1,07 %
- rhodium        0,21 %

EXEMPLE 10 PREPARATION D'UN CATALYSEUR (J) DE COMPARAISON

Un catalyseur est préparé selon la procédure décrite dans l'exemple 7 mais en remplaçant le nitrate de lanthane par une quantité de nitrate de potassium équivalent à 2,5 g d'oxyde de potassium.

Le support est alors imprégné selon le procédé décrit dans l'exemple 1 par 1,064 g de platine et 0,213 g de rhodium.

La composition de la couche poreuse du catalyseur (J) ainsi préparé est :
- alumine          95,97 %
- oxyde de potassium          2,67 %
- platine          1,13 %
- rhodium          0,23 %

EXEMPLE 11 PREPARATION D'UN CATALYSEUR (K) SELON L'INVENTION

On prépare comme dans l'exemple 7 un support de catalyseur composé d'un monolithe céramique de 0,904 l enduit de 90 g d'alumine.

Ce support est imprégné par 150 ml d'une solution de nitrate d'uranyle et de nitrate de potassium correspondant à 6 g d'oxyde d'uranium et 2,5 g d'oxyde de potassium.

Le support est alors imprégné selon le procédé décrit dans l'exemple 1 par 1,064 g de platine et 0,213 g de rhodium.

La composition de la couche poreuse du catalyseur (K) ainsi préparé est :
- alumine          90,20 %
- oxyde d'uranium          6,01 %
- oxyde de potassium          2,51 %
- platine          1,07 %
- rhodium          0,21 %

EXEMPLE 12 PREPARATION D'UN CATALYSEUR (L) SELON L'INVENTION

On prépare un support selon la procédure décrite dans l'exemple 4.

Le monolithe enduit est alors immergé dans 150 ml d'une solution d'acide hexachloroplatinique et de nitrate de palladium contenant 0,426 g de platine et 0,851 g de palladium. Après 1 h de contact le monolithe est séché à 150°C pendant 1h puis calciné à 600°C pendant 3h.

La composition de la couche poreuse du catalyseur (M) ainsi préparé est :
- alumine          90,14 %
- oxyde d'uranium          6,03 %
- oxyde de baryum          2,55 %
- platine          0,85 %
- rhodium          0,43 %

EXEMPLE 13 PREPARATION D'UN CATALYSEUR (M) DE COMPARAISON

Un support de catalyseur est préparé selon la procédure décrite dans l'exemple 2.

Ce support est imprégné par 150 ml d'une solution d'acide hexachloroplatinique contenant 1,277 g de platine. Après 1 h de contact le monolithe est séché à 150°C pendant 1 h puis calciné à 500°C pendant 3 h.

La composition de la couche poreuse du catalyseur (M) ainsi préparé est :
- alumine          89,93 %
- oxyde d'uranium          8,79 %
- platine          1,28 %

EXEMPLE 14 PREPARATION D'UN CATALYSEUR (N) SELON L'INVENTION

Un support de catalyseur comportant de l'alumine et des oxydes de baryum et d'uranium est préparé selon la procédure décrite dans l'exemple (7).

Ce support est impregné par 150 ml d'une solution d'acide hexachloroplatinique contenant 1,277 g de platine. Après 1 h de contact le monolithe est séché à 150°C pendant 1 h puis calciné à 500°C pendant 3 h.

La composition de la couche poreuse du catalyseur (N) ainsi préparé est :
- alumine          90,20 %
- oxyde d'uranium          6,01 %
- oxyde de baryum          2,51 %
- platine          1,28 %

## EXEMPLE 15 PREPARATION D'UN CATALYSEUR (O) SELON L'INVENTION

Un support de catalyseur comportant de l'alumine et des oxydes de baryum et d'uranium est préparé selon la procédure décrite dans l'exemple (7).

Ce support est imprégné par 150 ml d'une solution d'acide hexachloroplatinique et de nitrate de palladium contenant 0,851 g de platine et 0,426 g de palladium. Après 1 h de contact le monolithe est séché à 150°C pendant 1 h puis calciné à 500°C pendant 3 h.

La composition de la couche poreuse du catalyseur (N) ainsi préparé est :

- alumine          90,20 %
- oxyde d'uranium          6,01 %
- oxyde de baryum          2,51 %
- platine          0,85 %
- palladium          0,43 %

## EXEMPLE 16 PREPARATION D'UN CATALYSEUR (P) SELON L'INVENTION

Un support métallique à 62 canaux par cm2, de 0,94 l, de marque Metalit, de la société Behr, est oxydé sous atmosphère faiblement oxydante à 950°C, puis enduit d'une couche poreuse contenant de l'alumine et des oxydes de baryum et d'uranium selon la procédure décrite dans l'exemple 4 mais en remplaçant les 30 g d'acide nitrique par 28 g d'acide acétique.

La masse de la couche poreuse est de 93 g.

Ce support est imprégné par 150 ml d'une solution de dinitrodiammino platine et d'hexachlororrhodate d'ammonium contenant 1,106 g de platine et 0,221 g de rhodium. Après 5 mn de contact le monolithe est séché à 150°C pendant 1 h puis calciné à 500°C pendant 3 h.

La composition de la couche poreuse du catalyseur (P) ainsi préparé est :

- alumine          89,77 %
- oxyde d'uranium          6,21 %
- oxyde de baryum          2,62 %
- platine          1,17 %
- rhodium          0,23 %

## EXEMPLE 17 PREPARATION D'UN CATALYSEUR (Q) SELON L'INVENTION

Une solution de nitrate d'uranyle et de nitrate de baryum, contenant l'équivalent de 200 g d'oxyde d'uranium et 120 g d'oxyde de baryum, est imprégnée sur 680 g d'alumine EXP 531. Après calcination et broyage la poudre est utilisée comme dans l'exemple 4 pour enduire un monolithe céramique de 0,904 l.

Le support est alors imprégné selon la procédure décrite dans l'exemple 1 par 1,064 g de platine et 0,213 g de rhodium.

La composition de la couche poreuse du catalyseur (Q) ainsi préparé est :

- alumine          72,30 %
- oxyde d'uranium          16,45 %
- oxyde de baryum          9,97 %
- platine          1,07 %
- rhodium          0,21 %

## EXEMPLE 18 ACTIVITE DES DIFFERENTS CATALYSEURS EN POST COMBUSTION

Les catalyseurs sont vieillis et testés sur un banc-moteur comportant un moteur de 1900 cm3 muni d'une alimentation par injection régulant la richesse à partir de l'indication d'une sonde à oxygène placée sur la tubulure d'échappement, et fonctionnant avec un supercarburant répondant aux spécifications Eurosuper.

Les catalyseurs sont montés dans une enveloppe métallique, sauf celui de l'exemple 16 qui est déjà pourvu de son enveloppe, et installés sur la ligne d'échappement à environ 1 m du moteur. Entre le moteur et catalyseur est intallé un système de régulation de la température des gaz d'échappement entre 150 et 600°C.

Les catalyseurs dits neufs sont en fait pré-conditionnés 2 h sous gaz d'échappement à la richesse 1 à une température de 500°C.

Dans la phase de vieillissement des catalyseurs le banc-moteur fonctionne à une richesse moyenne de 0,95, et à un régime équivalent à celui d'un véhicule roulant à 150 km/h : les gaz d'échappement sont oxydants et leur température moyenne est de environ 800 à 900°C. Dans de telles conditions une durée de vieillissement de 200 heures permet de simuler le vieillissement en conditions réelles sur un véhicule parcourant 80 000 km.

Le test catalytique est réalisé sur le banc-moteur fonctionnant à la richesse moyenne de 1 en mode pulsé, c'est-à-dire subissant une variation périodique de la richesse. Dans ces tests la fréquence de pulsation est de 1 Hz, son amplitude est de 0,05.

La concentration en monoxyde de carbone avant et après passage sur le catalyseur est déterminée par un analyseur infrarouge.

La concentration en hydrocarbures est déterminée à l'aide d'un détecteur à ionisation de flamme.

La concentration en oxydes d'azote est déterminée à l'aide d'un analyseur par chimiluminescence.

La conversion intégrale d'un polluant est le rapport de l'intégrale de la courbe représentant la conversion de ce polluant en fonction de la température entre 250 et 550°C sur l'intégrale qui résulterait d'une conversion totale dans tout le domaine de température considéré. Elle est exprimée en pourcent.

Le tableau 1 ci-après rassemble les résultats obtenus en élimination du monoxyde de carbone (CO), des hydrocarbures (HC) et de oxydes d'azote (NOx) avec les divers catalyseurs (A), (B), (C), (D), (E), (F), (G), (H), (I), (J), (K), (L), (M), (N), (0), (P) et (Q) des exemples 1 à 17.

## Tableau 1

| N° Ex. | Référence du catalyseur | Conversion intégrale de CO catalyseur | | Conversion intégrale des HC catalyseur | | Conversion intégrale des NOx catalyseur | |
|---|---|---|---|---|---|---|---|
| | | neuf | vieilli | neuf | vieilli | neuf | vieilli |
| 1 | A | 74 % | 62 % | 72 % | 62 % | 67 % | 53 % |
| 2 | B | 72 % | 60 % | 71 % | 59 % | 64 % | 53 % |
| 3 | C | 58 % | 37 % | 55 % | 32 % | 55 % | 29 % |
| 4 | D | 84 % | 77 % | 74 % | 71 % | 73 % | 65 % |
| 5 | E | 77 % | 67 % | 75 % | 65 % | 68 % | 57 % |
| 6 | F | 82 % | 76 % | 74 % | 70 % | 76 % | 65 % |
| 7 | G | 82 % | 75 % | 74 % | 69 % | 75 % | 65 % |
| 8 | H | 60 % | 33 % | 55 % | 30 % | 58 % | 28 % |
| 9 | I | 80 % | 71 % | 72 % | 66 % | 70 % | 62 % |
| 10 | J | 56 % | 33 % | 54 % | 32 % | 54 % | 31 % |
| 11 | K | 82 % | 71 % | 73 % | 65 % | 73 % | 64 % |
| 12 | L | 76 % | 68 % | 72 % | 65 % | 68 % | 57 % |
| 13 | M | 68 % | 32 % | 70 % | 35 % | 48 % | 25 % |
| 14 | N | 76 % | 63 % | 73 % | 59 % | 54 % | 35 % |
| 15 | 0 | 78 % | 68 % | 74 % | 64 % | 67 % | 58 % |
| 16 | P | 85 % | 77 % | 76 % | 70 % | 75 % | 65 % |
| 17 | Q | 81 % | 75 % | 71 % | 69 % | 70 % | 62 % |

On peut constater que les catalyseurs préparés selon l'invention sont améliorés par rapport aux catalyseurs de l'art antérieur ou aux catalyseurs de comparaison, tant en ce qui concerne l'activité initiale que l'activité après vieillissement au banc-moteur à hautes températures et en conditions oxydantes.

EXEMPLE 18 EPURATION DE POLLUANTS DE GAZ D'ECHAPPEMENT D'UN MOTEUR DIESEL

Le catalyseur (N) contenant du platine, des oxydes d'uranium, de baryum et d'aluminium sur un support de cordiérite est comparé en dépollution d'un gaz d'échappement de moteur Diesel au catalyseur M qui ne contient pas de baryum.

Chaque catalyseur est monté dans un pot démontable puis est soumis à l'action du gaz d'échappement d'un véhicule Peugeot 505 à moteur Diesel pendant 30 mn afin d'y déposer des suies.

Après démontage du pot le catalyseur est installé dans un appareillage de laboratoire permettant de mesurer en continu la concentration en CO, HC et NOx à l'entrée et à la sortie du catalyseur.

Un aliquote de 70 cm3 de chaque catalyseur est alors soumis à une montée continue en température entre 150 et 550°C tandis qu'il est traversé sous un débit de 900 l/h par un mélange gazeux contenant 1000 ppm de C3H8, 1000 ppm de CO, 600 ppm de NO, 5 % de O2, 8 % de H20 et le complément à 100 % en N2.

La concentration en CO2 à la sortie de chaque catalyseur est égale à la somme des concentrations en CO2 provenant de l'oxydation des suies, de l'oxydation du CO et de l'oxydation des HC. La mesure des concentrations en CO et HC en entrée et sortie de catalyseur donne accès à la concentration en CO2 issue de ces oxydations. Par différence entre la concentration globale en CO2 en sortie de catalyseur, et celle dont le mode de calcul vient d'être présenté, on obtient la concentration en CO2 issue de la combustion des suies.

La concentration en CO2 issue de l'oxydation des suies atteint une valeur de 200 ppm dès 300°C pour le catalyseur (N) tandis qu'une température d'au moins 340°C est nécessaire pour qu'une telle concentration en CO2 issue de l'oxydation des suies soit mesurée avec le catalyseur ne contenant que du platine et de l'alumine.

Ceci montre que les catalyseurs contenant de l'uranium et un métal P permettent d'initier la combustion des suies issues d'un moteur Diesel, et donc des composés polyaromatiques qu'elles contiennent, à une température inférieure à celle requise par les catalyseurs avec uranium mais sans métal P.

**Revendications**

1. Catalyseur multifonctionnel pour la conversion du monoxyde de carbone, des hydrocarbures et des oxydes d'azote contenus dans les gaz d'échappement de moteurs à combustion interne, comprenant un support contenant une couche poreuse qui comprend une phase catalytiquement active comprenant au moins un métal A choisi dans le groupe forme par le platine, le rhodium, le palladium, le ruthénium, l'iridium et leurs mélanges caractérisé en ce que la couche poreuse comprend en % poids, à sec :
   - de 50 à 99,7 % d'au moins un oxyde inorganique réfractaire,
   - de 0,1 à 25 % d'au moins un oxyde d'uranium,
   - de 0,1 à 35 % d'au moins un oxyde d'au moins un métal P choisi dans le groupe formé par le lithium, le sodium, le potassium, le rubidium, le césium, le béryllium, le magnésium, le calcium, le strontium, le baryum, le lanthane, le praséodyme, le néodyme, le gadolinium, et l'yttrium, et,
   - de 0,1 à 20 % dudit métal A.

2. Catalyseur multifonctionnel selon la revendication 1, dans lequel la couche poreuse est constituée de billes ou d'extrudés.

3. Catalyseur multifonctionnel selon la revendication 1, dans lequel le support comprend un substrat métallique ou en matière céramique.

4. Catalyseur multifonctionnel selon la revendication 3, dans lequel le substrat est un matériau de forme monolithique, à structure cellulaire, en nids d'abeille.

5. Catalyseur multifonctionnel selon l'une des revendications 1 à 4, dans lequel la couche poreuse comprend en % poids, à sec :
   - de 82 à 6,6 % d'au moins un oxyde inorganique réfractaire,
   - de 2 à 12 % d'au moins un oxyde d'uranium,
   - de 1 à 15 % d'au moins un oxyde dudit métal P,
   - de 0,4 à 8 % d'au moins un métal A.

6. Catalyseur multifonctionnel selon l'une des revendications 1 à 5, dans lequel la somme des concentrations massiques de l'uranium et d'au moins un métal P, exprimée sous forme élémentaire, est au moins égale au tiers de la concentration des métaux A et de préférence au moins égale à la moitié de la concentration des métaux A.

7. Catalyseur multifonctionnel selon l'une des revendications 1 à 6, dans lequel l'oxyde inorganique réfractaire est choisi dans le groupe formé par l'alumine alpha, l'alumine gamma, l'alumine delta, l'alumine kappa, l'alumine éta, l'alumine théta, l'alumine ro, l'alumine khi, la silice, la silice-alumine, les zéolithes, et leurs mélanges et de préférence les alumines.

**8.** Catalyseur multifonctionnel selon la revendication 3, dans lequel la couche poreuse représente une quantité comprise entre 20 et 200 g/l de substrat et de préférence entre 50 et 150 g/l de substrat.

**9.** Utilisation d'un catalyseur multifonctionnel selon l'une des revendications 1 à 8 dans le traitement des gaz d'échappement des moteurs fonctionnant avec de l'essence ou du gazole.

**10.** Procédé de préparation d'un catalyseur selon l'une des revendications 1 à 8 caractérisé par les étapes successives suivantes :
a) on prépare une suspension aqueuse d'au moins un oxyde inorganique réfractaire, d'au moins un sel ou un oxyde d'uranium et d'au moins un sel ou un oxyde de métal P ou d'au moins un oxyde mixte d'uranium et de métal P,
b) on enduit le substrat par la suspension de façon à obtenir la couche poreuse contenant ledit oxyde inorganique, ledit sel ou oxyde d'uranium et ledit sel ou oxyde de métal P, ou ledit oxyde mixte d'uranium et de métal P,
c) on sèche et on effectue un traitement thermique à une température inférieure à 1000 °C,
d) on imprègne la couche poreuse résultant de l'étape c) par une solution d'au moins un précurseur d'au moins un métal A, et,
e) on sèche et on effectue un traitement thermique à une température inférieure à 1000 °C.

**11.** Procédé de préparation d'un catalyseur selon l'une des revendications 1 à 8, caractérisé par les étapes successives suivantes :
a) on prépare une suspension aqueuse d'au moins un oxyde inorganique réfractaire,
b) on enduit le substrat par la suspension de façon à obtenir la couche poreuse contenant ledit oxyde inorganique réfractaire,
c) on sèche et on effectue un traitement thermique à une température inférieure à 1000 °C,
d) on imprègne la couche poreuse résultant de l 'étape c)
soit par une solution d'au moins un sel d'uranium et d'au moins un sel de métal P,
soit par une solution d'au moins un sel d'uranium, d'au moins un sel de métal P et d'au moins une partie d'au moins un précurseur d'au moins un métal A,
e) on sèche et on effectue un traitement thermique à une température inférieure à 1000 °C
f) on imprègne la couche poreuse résultant de l'étape e) soit par la totalité d'au moins un précurseur d'au moins un métal A, soit par la partie restante d'au moins un précurseur d'au moins un métal A, et
g) on sèche et on effectue un traitement thermique à une température inférieure à 1000 °C.

**12.** Procédé de préparation d'un catalyseur selon la revendication 2, caractérisé par les étapes successives suivantes :
a) on imprègne des billes ou des extrudés, d'au moins un oxyde inorganique réfractaire par une solution d'au moins un sel d'uranium et d'au moins un sel de métal P,
b) on sèche et on effectue un traitement thermique à une température inférieure à 1000 °C,
c) on imprègne les billes ou les extrudés résultant de l'étape b) par une solution d'au moins un précurseur d'au moins un métal A, et,
d) on sèche et on effectue un traitement thermique à une température inférieure à 1000 °C.

**13.** Procédé de préparation selon la revendication 12, dans lequel après l'étape b) de cette revendication 12,
c) on broye les billes ou les extrudés et on obtient une poudre,
d) on prépare une suspension aqueuse contenant ladite poudre et on ajoute éventuellement au moins un oxyde inorganique réfractaire,
e) on enduit le substrat par la suspension de façon à obtenir la couche poreuse contenant le ou les oxydes inorganiques réfractaires, et lesdits oxydes d'uranium et d'au moins un métal P,
f) on imprègne la couche poreuse résultant de l'étape e) par une solution d'au moins un précurseur d'au moins un métal A,
g) on sèche et on effectue un traitement thermique à une température inférieure à 1000 °C.

**14.** Procédé de préparation d'un catalyseur selon l'une des revendications 1 à 8, dans lequel le substrat est constitué de feuilles métalliques et dans lequel, soit on enduit et on imprègne lesdites feuilles selon d'une des revendications 10, 11 et 13, on réalise le traitement thermique et l'on effectue la mise en forme monolithique, soit on enduit lesdites feuilles selon la revendication 10 ou 13, on réalise le traitement thermique, et on effectue la mise en forme monolithique, ensuite on imprègne la couche poreuse résultant du traitement thermique par une solution d'au moins un précurseur d'au moins un métal A, et on effectue un traitement thermique à une température inférieure à 1000 °C.

## Patentansprüche

1. Multifunktioneller Katalysator für die Umwandlung des Kohlenmonoxids, der Kohlenwasserstoffe und der Stickstoffoxide, die in den Abgasen von Verbrennungsmotoren enthalten sind, der umfaßt einen eine poröse Schicht enthaltenden Träger mit einer katalytisch aktiven Phase, die umfaßt bzw. enthält mindestens ein Metall A, ausgewählt aus der Gruppe, die besteht aus Platin, Rhodium, Palladium, Ruthenium, Iridium und Mischungen davon, dadurch gekennzeichnet, daß die poröse Schicht in Gew.-%, bezogen auf das Trockengewicht, umfaßt bzw. enthält:
   - 50 bis 99,7 % mindestens eines schwerschmelzbaren anorganischen Oxids,
   - 0,1 bis 25 % mindestens eines Uranoxids,
   - 0,1 bis 35 % mindestens eines Oxids mindestens eines Metalls P, ausgewählt aus der Gruppe, die besteht aus Lithium, Natrium, Kalium, Rubidium, Cäsium, Beryllium, Magnesium, Calcium, Strontium, Barium, Lanthan, Praseodym, Neodym, Gadolinium und Yttrium und
   - 0,1 bis 20 % des Metalls A.

2. Multifunktioneller Katalysator nach Anspruch 1, in dem die poröse Schicht aus Kügelchen oder Extrudaten besteht.

3. Multifunktioneller Katalysator nach Anspruch 1, in dem der Träger umfaßt ein Substrat aus Metall oder aus einem keramischen Material.

4. Multifunktioneller Katalysator nach Anspruch 3, in dem das Substrat aus einem Material mit monolithischer Form, mit Zellstruktur oder mit Bienenwabenstruktur besteht.

5. Multifunktioneller Katalysator nach einem der Ansprüche 1 bis 4, in dem die poröse Schicht in Gew.-%, bezogen auf das Trockengewicht, umfaßt bzw. enthält:
   - 82 bis 6,6 % mindestens eines schwerschmelzbaren anorganischen Oxids,
   - 2 bis 12 % mindestens eines Uranoxids,
   - 1 bis 15 % mindestens eines Oxids des Metalls P und
   - 0,4 bis 8 % mindestens eines Metalls A.

6. Multifunktioneller Katalysator nach einem der Ansprüche 1 bis 5, in dem die Summe der Massenkonzentrationen an Uran und mindestens einem Metall P, ausgedrückt in Form des Elements, mindestens gleich einem Drittel der Konzentration der Metalle A und vorzugsweise mindestens gleich der Hälfte der Konzentration der Metalle A ist.

7. Multifunktioneller Katalysator nach einem der Ansprüche 1 bis 6, in dem das schwerschmelzbare anorganische Oxid ausgewählt wird aus der Gruppe, die besteht aus $\alpha$-Aluminiumoxid, $\gamma$-Aluminiumoxid, $\delta$-Aluminiumoxid, $\kappa$-Aluminiumoxid, $\eta$-Aluminiumoxid, $\vartheta$-Aluminiumoxid, $\rho$-Aluminiumoxid, $\chi$-Aluminiumoxid, Siliciumdioxid, Siliciumdioxid-Aluminiumoxid, den Zeolithen und ihren Gemischen, vorzugsweise den Aluminiumoxiden.

8. Multifunktioneller Katalysator nach Anspruch 3, in dem die poröse Schicht eine Menge zwischen 20 und 200 g/l Substrat und vorzugsweise zwischen 50 und 150 g/l Substrat darstellt.

9. Verwendung eines multifunktionellen Katalysators nach einem der Ansprüche 1 bis 8 für die Behandlung von Abgasen von Benzin- oder Diesel-Motoren.

10. Verfahren zur Herstellung eines Katalysators nach einem der Ansprüche 1 bis 8, gekennzeichnet durch die folgenden aufeinanderfolgenden Stufen:
   a) man stellt eine wäßrige Suspension mindestens eines schwerschmelzbaren anorganischen Oxids, mindestens eines Salzes oder eines Oxids von Uran und mindestens eines Salzes oder eines Oxids des Metalls P oder mindestens eines gemischten Oxids von Uran und des Metalls P her,

b) man beschichtet das Substrat mit der Suspension unter Bildung einer porösen Schicht, die das genannte anorganische Oxid, das genannte Salz oder Oxid von Uran und das genannte Salz oder Oxid des Metalls P oder das genannte Mischoxid von Uran und Metall P enthält,
c) man trocknet und führt eine thermische Behandlung bei einer Temperatur unterhalb 1000°C durch,
d) man imprägniert die in der Stufe (c) resultierende poröse Schicht mit einer Lösung mindestens eines Vorläufers mindestens eines Metalls A und
e) man trocknet und führt eine thermische Behandlung bei einer Temperatur unterhalb 1000°C durch.

11. Verfahren zur Herstellung eines Katalysators nach einem der Ansprüche 1 bis 8, gekennzeichnet durch die folgenden aufeinanderfolgenden Stufen:
a) man stellt eine wäßrige Suspension mindestens eines schwerschmelzbaren anorgansichen Oxids her,
b) man beschichtet das Substrat mit der Suspension unter Bildung einer porösen Schicht, die das genannte schwerschmelzbare anorganische Oxid enthält,
c) man trocknet und führt eine thermische Behandlung bei einer Temperatur unterhalb 1000°C durch,
d) man imprägniert die aus der Stufe (c) resultierende poröse Schicht entweder mit einer Lösung mindestens eines Uransalzes und mindestens eines Salzes des Metalls P oder mit einer Lösung mindestens eines Uransalzes, mindestens eines Salzes des Metalls P und mindestens eines Teils mindestens eines Vorläufers mindestens eines Metalls A,
e) man trocknet und führt eine thermische Behandlung bei einer Temperatur unterhalb 1000°C durch,
f) man imprägniert die in der Stufe (e) resultierende poröse Schicht entweder mit der Gesamtmenge mindestens eines Vorläufers mindestens eines Metalls A oder mit dem restlichen Teil mindestens eines Vorläufers mindestens eines Metalls A und
g) man trocknet und führt eine thermische Behandlung bei einer Temperatur unterhalb 1000°C durch.

12. Verfahren zur Herstellung eines Katalysators nach Anspruch 2, gekennzeichnet durch die folgenden aufeinanderfolgenden Stufen:
a) man imprägniert Kügelchen oder Extrudate mindestens eines schwerschmelzbaren anorganischen Oxids mit einer Lösung mindestens eines Uransalzes und mindestens eines Salzes des Metalls P,
b) man trocknet und führt eine thermische Behandlung bei einer Temperatur unterhalb 1000°C durch,
c) man imprägniert die Kügelchen oder die Extrudate, die aus der Stufe (b) resultieren, mit einer Lösung mindestens eines Vorläufers mindestens eines Metalls A und
d) man trocknet und führt eine thermische Behandlung bei einer Temperatur unterhalb 1000°C durch.

13. Verfahren zur Herstellung nach Anspruch 12, bei dem nach der Stufe (b) dieses Anspruchs,
c) man die Kügelchen oder die Extrudate zerkleinert (mahlt) unter Bildung eines Pulvers,
d) man eine wäßrige Suspension herstellt, die das genannte Pulver enthält, und gegebenenfalls mindestens ein schwerschmelzbares anorganisches Oxid zugibt,
e) man das Substrat mit der Suspension beschichtet unter Bildung der porösen Schicht, die das oder die schwerschmelzbaren anorganischen Oxide und die genannten Oxide von Uran und mindestens eines Metalls P enthält,
f) man die aus der Stufe (e) resultierende poröse Schicht mit einer Lösung mindestens eines Vorläufers mindestens eines Metalls A imprägniert und
g) man trocknet und eine thermische Behandlung bei einer Temperatur unterhalb 1000°C durchführt.

14. Verfahren zur Herstellung eines Katalysators nach einem der Ansprüche 1 bis 8, bei dem das Substrat aus Metallfolien (Metallblättchen) besteht, bei dem man entweder die genannten Folien (Blättchen) nach einem der Ansprüche 10, 11 und 13 beschichtet und imprägniert, eine thermische Behandlung durchführt und sie in eine monolithische Form überführt, oder man die genannten Folien (Blättchen) nach Anspruch 10 oder 13 beschichtet, eine thermische Behandlung durchführt und sie in eine monolithische Form überführt, man anschließend die aus der thermischen Behandlung resultierende Schicht mit einer Lösung mindestens eines Vorläufers mindestens eines Mealls A imprägniert und eine thermische Behandlung bei einer Temperatur unterhalb 1000°C durchführt.

**Claims**

1. A multifunctional catalyst for converting carbon nonoxide, hydrocarbons and nitrogen oxides contained in exhaust funes from internal combustion engines, comprising a carrier containing a porous layer which contains a catalytically active phase comprising at least one metal A from the group formed by platinum, rhodium, Palladium, ruthenium, iridium and mixtures thereof, characterised in that the porous layer comprises, as a dry weight percentage:

- about 50 to about 99.7% of at least one refractory inorganic oxide,
- about 0.1 to about 25% of at least one uranium oxide,
- about 0.1 to about 35% of at least one oxide of at least one metal P, selected from the group formed by lithium, sodium, potassium, rubidium, cesium, beryllium, magnesium, calcium, strontium, barium, lanthanum, praseodymium, neodymium, gadolinium, yttrium and zirconium, and,
- about 0.1 to about 20% of said metal A.

2. The catalyst of Claim 1, wherein the porous layer is made up of spheres or extrusions.

3. The catalyst of Claim 1, wherein the carrier comprises a substrate made of metal or ceramic material.

4. The catalyst of Claim 3, wherein the substrate is a material of monolithic form with a cellular structure.

5. The catalyst of any of Claims 1 to 4, wherein the porous layer comprises, as a dry weight percentage:
- about 82 to about 96.6% of at least one refractory inorganic oxide,
- about 2 to about 12% of at least one uranium oxide,
- about 1 to about 15% of at least one oxide of said metal P, and
- about 0.4 to about 8% of at least one metal A.

6. The catalyst of any of Claims 1 to 5, wherein the sun of the concentrations by weight of uranium and at least one metal P, expressed in elemental form, is at least one-third of the concentration of the metals A, and preferably at least half the concentration of the metals A.

7. The catalyst of any of Claims 1 to 6, wherein the refractory inorganic oxide is selected from the group formed by alpha alumina, gamma alumina, delta alumina, kappa alumina, eta alumina, theta alumina, ro alumina, khi alumina, silica, alumina-silica, zeolites and mixtures thereof, preferably aluminas.

8. The catalyst of Claim 3, wherein the porous layer represents a quantity of from 20 to 200 g/l of substrate and preferably from 50 to 150 g/l of substrate.

9. Use of the multifunctional catalyst of any of Claims 1 to 8 in treating exhaust fumes from engines operating with petrol or gas oil.

10. A method of preparing the catalyst of any of Claims 1 to 9, characterised by the following successive stages:
a) preparing an aqueous suspension of at least one refractory. inorganic oxide, at least one uranium salt or oxide and at least one salt or oxide of metal P, or at least one composite oxide of uranium and metal P,
b) coating the substrate with the suspension so as to obtain the porous layer containing said inorganic oxide, said uranium salt or oxide and said salt or oxide of metal P, or said composite oxide of uranium and metal P,
c) drying and carrying out heat treatment at a temperature below 1000°C,
d) impregnating the porous layer resulting from stage c) with a solution or at least one precursor of at least one metal A, and
e) drying and carrying out heat treatment below a temperature of 1000°C.

11. A method of preparing the catalyst of any of Claims 1 to 9, caracterised by the following successive stages:
a) preparing an aqueous suspension of at least one refractory inorganic oxide,
b) coating the substrate with the suspension so as to obtain the porous layer containing the refractory inorganic oxide,
c) drying it and carrying out heat treatment at a temperature below 1000°C.
d) impregnating the porous layer resulting from stage c)
either with a solution of at least one uranium salt and at least one salt of metal P,
or with a solution of at least one uranium salt, at least one salt of metal P and at least part of at least one precursor of at least one metal A.

e) drying it and carrying out heat treatment at a temperature below 1000°C,

f) impregnating the porous layer resulting from stage e) either with all of at least one precursor of at least one metal A, or with the remainder of at least one precursor of at least one metal A, and

g) drying it and carrying out heat treatment at a temperature below 1000°C.

12. A method of preparing the catalyst of Claim 2, characterised by the following successive stages:

a) impregnating spheres or extrusions of at least one refractory inorganic oxide with a solution of at least one uranium salt and at least one salt of metal P,

b) drying them and carrying out heat treatment at a temperature below 1000°C,

c) impregnating the spheres or extrusions resulting from stage b) with a solution of at least one precursor of at least one metal A and

d) drying them and carrying out heat treatment at a temperature below 1000°C.

13. A preparation method of Claim 12, wherein stage b) of Claim 12 is followed by the steps of :

c) grinding the spheres or extrusions to obtain a powder,

d) preparing an aqueous suspension containing said powder and possibly adding at least one refractory inorganic oxide,

e) coating the substrate with the suspension, so as to obtain the porous layer containing the refractory oxide or oxides and said oxides of uranium and of at least one metal P,

f) impregnating the porous layer resulting from stage e) with a solution of at least one precursor of at least one metal A,

g) drying it and carrying out heat treatment at a temperature below 1000°C.

14. The method of any of Claims 1 to 9, wherein the substrate comprises metal sheets, and wherein either said sheets are coated and impregnated in accordance with any of Claims 10, 11 and 13, subjected to heat treatment and shaped as blocks, or said sheets are coated in accordance with Claim 10 or 13, subjected to heat treatment and shaped as blocks, after which the porous layer resulting from the heat treatment is impregnated with a solution of at least one precursor of at least one metal A, and heat treatment is carried out at a temperature below 1000°C.